# EUROPEAN PATENT APPLICATION

(11) **EP 1 558 032 A2**
(43) Date of publication of application: **27.07.2005**
(21) Application number: 05250326.5
(22) Date of filing: 24.01.2005
(51) Int. Cl.: H04N 5/913

(54) **Piracy prevention system**

(30) Priority: 22.01.2004 US 538602 P
(71) Applicant: Widevine Technologies, Inc., Seattle, WA 98164 (US)
(72) Inventor: The designation of the inventor has not yet been filed
(74) Representative: Williams, David John

(57) **Abstract**

System, apparatus, and methods are directed to preventing a media player from playing a pirated media file, such as a pre-release motion picture. The invention treats the pirated media file as an infection and develops an immune system for the media player. The invention may be taught how to recognize an infection by using an immunization record for each media file that is to be treated as an infection. As the media file is played in real-time, a fingerprint is determined (408). A comparison is performed between the immunization records and the determined fingerprint (410). If a match is determined (412), then an alert may be provided (414). The alert may be employed to perform any of a variety of actions, including disabling the media player, sending a message to an owner of a digital right for the media file, and the like.

## Description

### CROSS-REFERENCE TO RELATED APPLICATIONS

This application claims the benefit of U.S. Provisional Application Serial No. 60/538,602 filed on January 22, 2004, the benefit of the earlier filing date of which is hereby claimed under 35 U.S.C. § 119(e) and further incorporated by reference.

### FIELD OF THE INVENTION

The present invention relates to digital piracy prevention, and more particularly, but not exclusively, to a system and method for detecting pirated motion pictures prior to a home entertainment release date.

### BACKGROUND OF THE INVENTION

Motion picture piracy is a significant problem. Pirates are known to produce and sell Video Compact Discs (VCDs) and Digital Versatile Discs (DVDs) of motion pictures prior to the official home entertainment release. Recently, VCD and DVD piracy has become a multi-billion dollar business. Digital copies of motion pictures are also often freely distributed on the Internet, further reducing the value of the motion picture release. As a result, motion picture studios have lost revenue due to this piracy.

Motion pictures are typically released and distributed in phases and/or into different geographic markets. Motion picture prints, however, may be expensive to produce - typically, around $3,000 to around $5,000 per print. Therefore, often a set of prints might be produced for a U.S. release and then the same set of prints might be sent to a foreign market. After the earning from the theatrical release may be achieved, the picture may be released to a home entertainment market on video tape, DVD, and so forth. Currently, the motion picture industry business relies upon this phased distribution model. However, the 35 mm film format is inherently unsecurable. Film prints of motion pictures are often released to theaters around the world where some prints are freely copied in any one of several ways. For example, some prints are copied via camming (using a hand held camcorder that is smuggled into the theater), telesyncing (camming from a tripod in the centre of the theater and synced to an audio track recorded from the projection room), or telecine (the print is transferred to video). Pirated copies of the motion picture may then be transferred to computing device and sent virtually around the world in minutes using the Internet. At the 'other end,' the pirated motion pictures may be transferred to another medium, such as a DVD and VCD. The pirated motion pictures may also be played directly by an end media player. Such actions have made it difficult to reduce the amount of piracy.

Moreover, there are several types of media players available to play back pirated motion pictures. For example, VCDs can be played in many DVD players. Also, some of the more sophisticated pirates are now producing pirated movies onto DVD. Therefore, it is with respect to these considerations and others that the present invention has been made.

### BRIEF DESCRIPTION OF THE DRAWINGS

Non-limiting and non-exhaustive embodiments of the present invention are described with reference to the following drawings. In the drawings, like reference numerals refer to like parts throughout the various figures unless otherwise specified.

For a better understanding of the present invention, reference will be made to the following Detailed Description of the Invention, which is to be read in association with the accompanying drawings, wherein:
FIGURE 1 shows a functional block diagram illustrating one embodiment of an environment for practicing the invention;
FIGURE 2 shows one embodiment of a media player that may be included in a system implementing the invention;
FIGURE 3 shows a logical block diagram illustrating one embodiment of components of a Piracy Immunity Manager (PIM) for use in the media player of FIGURE 2; and
FIGURE 4 illustrates a logical flow diagram generally showing one embodiment of a process for managing access to a media file, in accordance with the present invention.

### DETAILED DESCRIPTION OF THE INVENTION

The present invention now will be described more fully hereinafter with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

Briefly stated, the present invention is directed to preventing a media player from playing a pirated media file, such as a pre-release motion picture, audio file, graphics file, and the like. That is, an intent of the invention includes enabling a media player to recognize a piece of content (e.g., some or all of the media file) and to prevent its playback until its home entertainment release date. The invention treats the pirated media file as an infection and develops an immune system for the media player. A process of immunization is established where the immune system is taught how to recognize an infection. In one embodiment, the immune system is taught by loading it with an immunization record for each media file that is to be treated as an infection. As the media file is played by the media player, a fingerprint is determined. A comparison is performed between the immunization records and the determined fingerprint. In one embodiment, the comparison is based, at least in part, on a weighted comparison of digital components of the fingerprint, with a match being based, in part, on satisfying a pre-determined confidence level. If a match is determined, then an alert is provided. The alert may be employed to perform any of a variety of actions, including disabling the media player, sending a message to an owner of a digital right associated with the media file, and the like. In addition, updates to the immunization records may be performed over a network, a DVD, a VCD, and the like. In one embodiment, an immunization record store is periodically scanned; expunging any identified expired immunization records, and requesting an update of the immunization record store to be performed. In another embodiment, the media player is configured to be unable to access a media file, until an update is performed.

### Illustrative Operating Environment

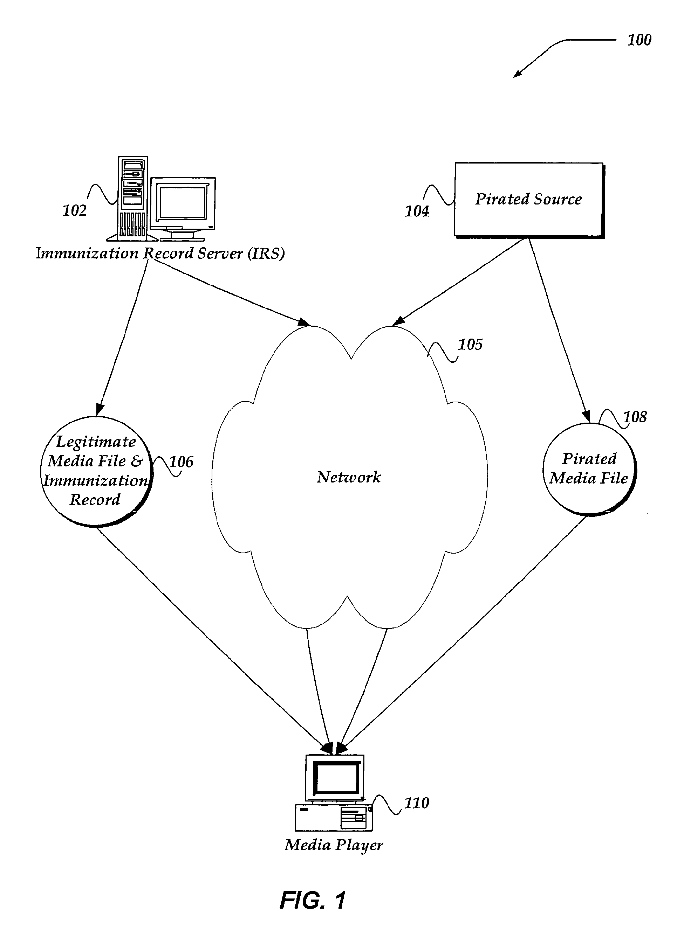

FIGURE 1 illustrates one embodiment of an environment in which the present invention may operate. However, not all of these components may be required to practice the invention, and variations in the arrangement and type of the components may be made without departing from the spirit or scope of the invention.

As shown in the figure, environment 100 includes Immunization Record Server (IRS) 102, pirated source 104, network 105, legitimate media file/Immunization Record (LM/IR) 106, pirated media file 108, and media player 110.

Network 105 is in communication with IRS 102, pirated source 104, and media player 110. LM/IR 106 is in communication with IRS 102 and media player 110, while pirated media file 108 is in communication with pirated source 104 and media player 110.

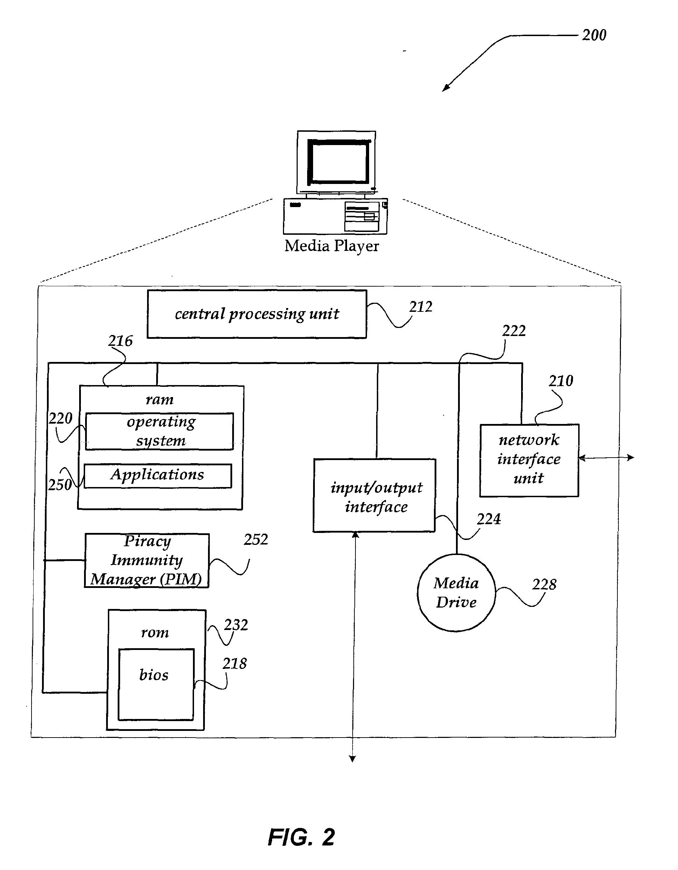

Media player 110 is described in more detail below in conjunction with FIGURES 2-3. Briefly, however, media player 110 includes virtually any device that is configured to enable receive and play a media file, including, but not limited to television appliances, digital recorders, set-top boxes, cellular phones, mobile devices, personal digital assistants (PDAs), personal computers, jukeboxes, hybrid Internet-music-player/home-stereo-component-system, and the like. Media player 110 may further be configured to receive an immunization record and employ the immunization record to determine whether a media file is to be treated as an infection.

In one embodiment, a media file may represent a pre-release, geographic release, and the like, of a motion picture. Pre-releases may include a release of a motion picture that is configured to be viewed by a pre-determined number of viewers, such as designated screeners, movie critics, test audiences, and the like. After a period of time, pre-releases are typically replaced by formal releases, such as home entertainment releases, and the like. Geographic releases may include a motion picture release that is configured to be released to a pre-defined geographic location of the world, such as the west coast of the United States, the United States, Europe, Southeast Asia, and the like. Such geographic releases are typically not intended for audience viewing outside of the pre-defined geographic location. Media files are not restricted to these descriptions, however, and may include virtually any digital content that is configured to have a restriction placed upon it, such as time, location, and the like. Unfortunately, such pre-releases, geographic releases, and the like, may be pirated using a variety of mechanisms, and sent to audiences other than those that were originally intended to view the media file. Thus, as shown in FIGURE 1, pirated source 104 represents virtually any source of a media file that is considered to be improperly obtained.

Media files include data files that may be formatted using any of a variety of digital formats that include audio and/or image information. Audio files may be, for example, computer files that include computer code, which encodes audio information such as music, speech, sound effects, and the like. Audio file formats currently popular and frequently encountered include 'wave' files (*.wav), MP3 files (*.mp3), liquid audio files (*.lqt), Real AudioTM (*.rm, *.ram), and the like. Image files may include still images and 'moving' images (hereafter referred to generally as 'video'). Still images may include, for example, textual files, photographs, drawings, paintings, trademarks, logos, designs, and so forth. Video files may include, for example, computer files, which include computer code encodings of a series of images that may be viewed in rapid succession to create an illusion of motion. Video files formats may include MPEG (*.mpg) files, QuickTime (*.qt) files, Vivo (*.viv) files, Real VideoTM (*.rm), and so forth. Some of these file formats (Real AudioTM and Real VideoTM, for example) can be downloaded as streaming audio and/or video that is played in real-time. Other file formats may be downloaded in their entirety and stored locally for playing and/or for further redistribution at a future time after downloading. Similarly, such media files may be configured and stored on a variety of mediums, DVD, VCD, high definition DVD, Super Video CD (SVCD), Super Audio CD (SACD), and the like.

As shown in FIGURE 1, pirated media file 108 represents one embodiment of an improperly obtained media file stored on a tangible medium such as described above. Pirated media files may also be provided by pirated source 104 using virtually any other mechanisms, including transporting the pirated media file over a network, such as network 105.

Network 105 is enabled to employ any form of computer readable media for communicating information from one electronic device to another. Also, network 105 can include the Internet in addition to local area networks (LANs), wide area networks (WANs), direct connections, such as through a universal serial bus (USB) port, other forms of computer-readable media, or any combination thereof. On an interconnected set of LANs, including those based on differing architectures and protocols, a router acts as a link between LANs, enabling messages to be sent from one to another. Also, communication links within LANs typically include twisted wire pair or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art. Furthermore, remote computers and other related electronic devices could be remotely connected to either LANs or WANs via a modem and temporary telephone link. In essence, network 105 includes any communication method by which information may travel between IRS 102, pirated source 104, media player 110, and another computing device. Furthermore, the number of WANs, and LANs in FIGURE 1 may be increased or decreased arbitrarily.

The media used to transmit information in communication links as described above illustrates one type of computer-readable media, namely communication media. Generally, computer-readable media includes any media that can be accessed by a computing device. Computer-readable media may include computer storage media, communication media, or any combination thereof.

Additionally, communication media typically embodies computer-readable instructions, data structures, program modules, or other data in a modulated data signal such as a carrier wave or other transport mechanism and includes any information delivery media. The terms "modulated data signal," and "carrier-wave signal" includes a signal that has one or more of its characteristics set or changed in such a manner as to encode information, instructions, data, and the like, in the signal. By way of example, communication media includes wired media such as twisted pair, coaxial cable, fiber optics, wave guides, and other wired media and wireless media such as acoustic, RF, infrared, and other wireless media.

IRS 102 may include virtually any device that is configured to provide an immunization record associated with a media file. Devices that may operate as IRS 102 include personal computers desktop computers, multiprocessor systems, microprocessor-based or programmable consumer electronics, network PCs, servers, and the like.

IRS 102 may provide the immunization record to media player 110 using any of a variety of mechanisms. For example, IRS 102 may insert the immunization record onto a DVD, high definition DVD, Super Video CD (SVCD), VCD, Super Audio CD (SACD), and the like, represented by LM/IR 106. Such medium may further include an unrelated media file. For example, a DVD may include an immunization associated with one media file, such as movie "A," and also include a different unrelated media file, such as a promotion for movie "B." IRS 102 may also provide the immunization to media player 110 over a network, such as network 105.

In the present invention, an improperly obtained media file, such as a pre-release, geographic release motion picture, and the like, may be viewed as an infection by media player 110. Thus, for example, a motion picture media file that has not yet had its home entertainment release is generally considered to be an infection. Typically, there are a relatively small number of infections that the present invention may need to guard against. For example, the seven most prominent Hollywood studios typically make approximately 20 motion pictures each year. In most cases, the home entertainment releases for each motion picture is between about six to twelve months after the theatrical release. As a result, enabling the present invention to guard against approximately 200 infections may be sufficient. However, the invention is not constrained to these numbers, and may be configured to manage virtually any number of infections.

To manage a response to an infection, IRS 102 may be configured to determine an immunization record from a legitimate (e.g., authorized) media file. A typical immunization record may include, for example, a compact fingerprint of a motion picture, or other media file, in pre-release, geographic release, and the like, and a home entertainment release date, or similar appropriate release date upon which the media file may no longer be considered as an infection by media player 110. The immunization record may expire once the media file's determined to no longer be considered an infection. That is, for example, where the media file is a motion picture, the immunization may expire once the motion picture is in home entertainment release.

A typical immunization record may include a variety of fields, each of which may be of various sizes. For example, where the media file represents pre-release content, a home entertainment release date might be included that is about four bytes, a media file title Identifier might be also included that is about 32 bytes, and so forth. Also, a typical fingerprint might also be included that is between about 8 and about 800 kilobytes depending on a resolution, level of confidence desired for determining a match, a type of mechanism employed to determine the fingerprint, and the like.

The fingerprint within the immunization record represents a unique signature of the media file that is generally invariant to a variety of distorting transformations that may arise due to pirating, including, zooming, panning, cropping, trapezoidal distortions, frame rate variations, color gamut changes, compression, transcoding, and the like.

The fingerprint may be derived from using any of a variety of mechanisms that may sample and analyze a media file. Such mechanisms may include, for example, those that are described in co-pending U.S. Patent Application, Serial Number 09/988,824, entitled "Media Tracking System and Method," filed November 20, 2001, which is incorporated herein by reference. Such mechanisms may include, for example, deriving the fingerprint based on a word count calculated for each of selected image or group of images, within the media file. The fingerprint may also be generated using a word count per groups of pictures (also referred to as "GOPs") that may be plotted over a pre-determined length of the media file. In one embodiment, a waveform may be derived from this data that may be used to generate a unique media file identifier for use as a fingerprint. For instance, an energy level over time may be determined for the waveform, and employed to generate a fingerprint. Fingerprints may also include identifiers generated by a data set called an 'image vector,' for each image or selected images of the media file. However, the invention is not limited to these examples, and virtually any mechanism may be employed that is invariant to at least the above mentioned concerns.

### Illustrative Media Player

FIGURE 2 shows one embodiment of a media player employing an immune system, according to one embodiment of the invention. Media player 200 may include many more or less components than those shown. The components shown, however, are sufficient to disclose an illustrative embodiment for practicing the invention.

Media player 200 includes processing unit 212, and mass memory, each of which is in communication with each other via bus 222. The mass memory generally includes RAM 216, ROM 232, and one or more permanent mass storage devices, such as media drive 228. The mass memory stores may store operating system 220 for controlling the operation of media player 200. Any general-purpose operating system may be employed. Media player 200 may also employ a special-purpose operating system. RAM 216 may also include one or more applications 250 that may enable media player 200 to perform a variety of actions, including recording of a media file, rewinding a media file, fast forwarding the media file, enabling a streaming media file to be received, and the like. Applications 250 may also enable virtually any other actions including enabling email, and other communications with another computing device, and the like.

Basic input/output system ("BIOS") 218 may also be provided for controlling the low-level operation of media player 200. As illustrated in FIGURE 2, media player 200 also can communicate with the Internet, or some other communications network, such as network 105 in FIGURE 1, via network interface unit 210, which is constructed for use with various communication protocols including the UDP/IP, TCP/IP protocols. However, the invention is not limited to these protocols, and virtually any network protocol may be employed. Network interface unit 210 is sometimes known as a transceiver, transceiving device, network interface card (NIC), and the like.

Media player 200 also includes input/output interface 224 for communicating with external devices, such as a mouse, keyboard, television, display device, or other input/output devices not shown in FIGURE 2.

Media drive 228 includes virtually any device and related software that is configured to receive a media file on a pre-determined content medium. Such devices include, but are not limited to, a DVD drive, high definition DVD drive, Super Video CD (SVCD) drive, VCD drive, Super Audio CD (SACD) drive, and other content media devices. For example, media drive 228 may also be Dynamic Digital Sound (DDS) drive. Moreover, media drive 228 may also support write capabilities, such as through a DVD/RW drive, and the like. Media drive 228, however, is not limited to DVD, and CD technologies and virtually any other digital media technology may be employed without departing from the scope of spirit of the present invention.

Media drive 228 may also include capabilities to enable a media file to be erased, destroyed, written over, and the like. Media drive 228 may receive an instruction, event, and the like, from PIM 252 that directs it to disable itself from further reads of the media file, destroy the media file, and the like.

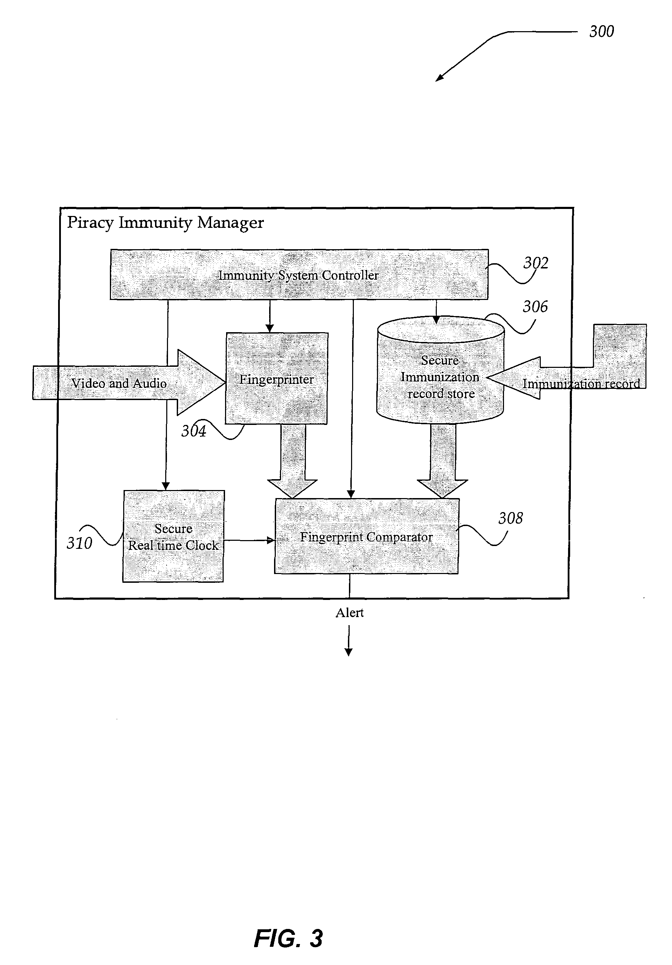

PIM 252 is described in more detail below in conjunction with FIGURE 3. Briefly, however, PIM 252 is configured to treat pirated media files as an infection. PIM 252 may be taught about possible infections, by loading it with an immunization record for each infection. PIM 252 may update a store of the immunization records over a network, such as illustrated in FIGURE 1, a DVD, and the like, such as LM/IR 106 of FIGURE 1, and the like. PIM 252 may then employ the immunization record to monitor media files to determine if the media file is an infection. If it is determined to be an infection, PIM 252 may then provide a pre-determined alert, message, action, a true/false indication of a pirated media file, and the like. In one embodiment, the alert is provided in employing any of a variety of secure communication mechanisms. For example, at power up of PIM 300, or upon a similar event, PIM 300 may establish a secure communication channel to a component of media player 200 for the receipt of immunization records and for issuing of the alerts.

PIM 252 may be implemented as part of an application that provides client side monitoring of media files. PIM 252 can also be implemented in an integrated circuit, part of a silicon core, and the like, within media player 200. In one embodiment, PIM 252 could be licensed to a manufacturer of media player 200. In another embodiment, PIM 252 may be downloaded as an application into PIM 252, from another medium, such as a DVD, over a network, and the like.

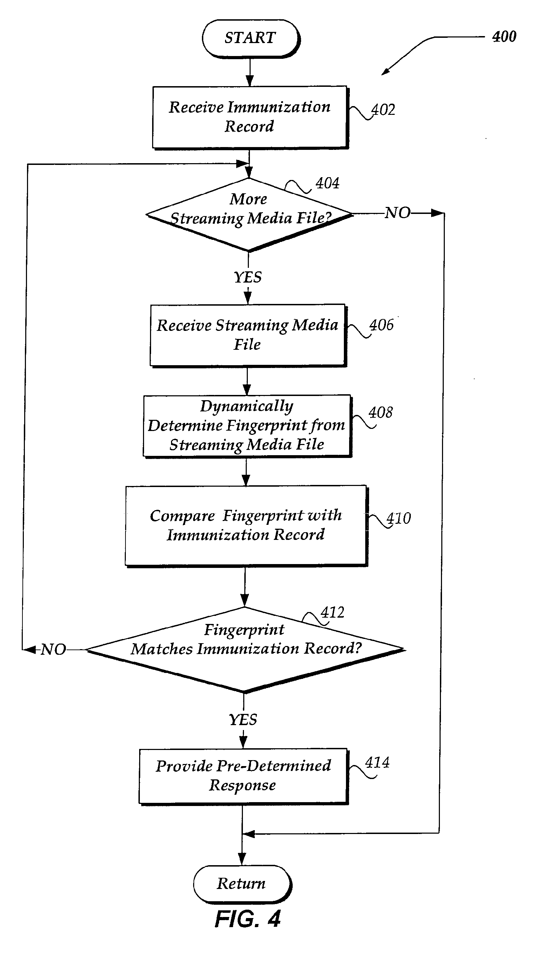

FIGURE 3 shows a logical block diagram illustrating one embodiment of components of the Piracy Immunity Manager (PIM) of FIGURE 2. PIM 300 of FIGURE 3 may include many more or less components than those shown. The components shown, however, are sufficient to disclose an illustrative embodiment for practicing the invention. Moreover, PIM 300 may employ a process such as described below in conjunction with FIGURE 4 to perform actions.

As shown, PIM 300 includes immunity system controller 302, fingerprinter 304, secure immunization record store 306, fingerprinter comparator 308, and secure real-time clock 310. Immunity system controller 302 is in communication with fingerprinter 304, secure immunization record store 306, fingerprinter comparator 308, and secure real-time clock 310. Fingerprinter 304 and secure immunization record store 306 are each in further communication with fingerprinter comparator 308. Secure real-time clock 310 is also in communication with fingerprinter comparator 308.

Immunity system controller 302 is configured to manage actions of other components within PIM 300, including providing timing signals, event instructions, and the like. In one embodiment, immunity system controller 302 may include an operating system, application, and the like, for managing actions of the other components.

Secure immunization record store 306 includes virtually mechanism configured to receive and securely store immunization records, including a database, a file, a flash memory device, and the like. In one embodiment, secure immunization record store 306 is configured as a flash memory that may store at least about 200 immunization records. However, the invention is not limited to this storage capacity, and another may be selected without departing from the scope or spirit of the invention.

Secure immunization record store 306 may also be configured to provide an alert to immunity system controller 302 if tampering is detected. In another embodiment, secure immunization record store 306 may be configured to employ security certificates and the like, to ensure that an immunization record is proper, instructions and the like are from immunity system controller 302, and the like.

Secure immunization record store 306 may be updated with new immunization records using a variety of mechanisms including over a network, a DVD device, and the like. For example, a movie studio could include private data in a DVD of a home entertainment release of a particular motion picture the immunization records for other current theatrical releases. In this way, a media player could be updated without ever having to be connected to the Internet.

In one embodiment of the invention, secure immunization record store 306 and/or immunity system controller 302 may be configured to restrict the media player for playing if secure immunization record store 306 has not received an update to the stored immunization records within a pre-defined period of time.

Secure immunization record store 306 may be periodically scanned for expired immunization records by reference to a real-time clock source. Also, an older immunization record can be removed when a more current immunization record is received. That is, secure immunization record store 306 may expire those immunization records where the associated media file, has reached its home entertainment release date, or other date where a media file is to no longer to be considered as an infection.

Secure real-time clock 310 may provide real-time clock information in a manner that minimizes tampering or otherwise modifying its output information. Moreover, secure real-time clock 310 may also be configured to be securely set using any of a variety of secure mechanisms, including receiving timing information securely of a network, and the like.

Fingerprinter 304 is configured to receive a media file, as it is played and to determine from the media file, a fingerprint. Fingerprinter 304 may employ virtually any mechanism to determine a fingerprint, including those described above. Fingerprinter 304 is arranged to provide the fingerprint to fingerprinter comparator 308. Fingerprinter comparator 308 is configured to compare immunization records from secure immunization record store 306 to determine whether there is a match. In one embodiment, fingerprinter comparator 308 may employ a pre-determined confidence level to determine if there is a match. Such confidence level may, for example, be selected to determine a match, or one that is sufficiently close to be considered to have arisen from a same media file. Thus, in one embodiment, the match may be determined from a comparison to a specified maximum allowable threshold, given the pre-determined confidence level. If a match is determined, fingerprinter comparator 308 in conjunction with immunity system controller 302 may be further configured to provide a predefined action, including an alert, such as a true/false detection of a pirated media file, and the like. In one embodiment, PIM 300 may be configured to provide an instruction that a media player is to be disabled from future reads of the media file, a message may also be sent over a network, and the like.

FIGURE 4 illustrates a logical flow diagram generally showing one embodiment of a process for managing access to a media file, such as a pirated motion picture and the like, in accordance with the present invention. Process 400 of FIGURE 4 may, for example, be implemented within PIM 300 of FIGURE 3.

Process 300 begins, after a start block, at block 402, where an immunization record is received. Such immunization record is employed to determine how and when a media file is to be identified as an infection. In one embodiment, a plurality of immunization records may be received. Out of date immunization records may also, at block 402, be expunged, such that a valid media file is not inadvertently determined to be an infection.

Processing flows next to decision block 404, where a determination is made whether there are more portions of the media file to be read. At this first pass through process 400, it is assumed that the media file is being read in real-time (e.g., streamed). If it is determined that more streaming media files are to be read, processing flows to block 406; otherwise, processing returns to a calling process.

At block 406, at least a portion of the streaming media file is received. If the media file is a motion picture, video, and the like, a sequence of the media file may be read. Thus, in one embodiment, the entire media file need not be received. Processing then proceeds to block 408, where a fingerprint is determined based on the received portion of the media file. At block 408, the fingerprint is determined dynamically for media file. Thus, for example, the fingerprint may be determined multiple times, based, at least in part of a different portion of the media file, as the media file is streamed through the process.

Process 400 continues to block 410, where the fingerprint is compared to fingerprints within the immunization records to determine if a match exists.

At decision block 412, if a match is determined to exist between the fingerprint of the streamed media file and that within at least one immunization record, then processing flows to block 412; otherwise, processing loops to decision block 404 to continue reading the media file and/or files. At block 414, a pre-determined response is performed, including generating a pre-defined message, alert, performing a pre-defined action, and the like. Upon completion of block 414, processing returns to the calling process to perform other actions.

It will be understood that each block of the flowchart illustrations discussed above, and combinations of blocks in the flowchart illustrations above, can be implemented by computer program instructions. These program instructions may be provided to a processor to produce a machine, such that the instructions, which execute on the processor, create means for implementing the operations indicated in the flowchart block or blocks. The computer program instructions may be executed by a processor to cause a series of operational steps to be performed by the processor to produce a computer-implemented process such that the instructions, which execute on the processor, provide steps for implementing the actions specified in the flowchart block or blocks.

Accordingly, blocks of the flowchart illustrations support combinations of means for performing the indicated actions, combinations of steps for performing the indicated actions and program instruction means for performing the indicated actions. It will also be understood that each block of the flowchart illustrations, and combinations of blocks in the flowchart illustrations, can be implemented by special purpose hardware-based systems, which perform the specified actions or steps, or combinations of special purpose hardware and computer instructions.

The above specification, examples, and data provide a complete description of the manufacture and use of the composition of the invention. Since many embodiments of the invention can be made without departing from the spirit and scope of the invention, the invention resides in the claims hereinafter appended.

## Claims

1. A media player for managing media file piracy, comprising:
an immunization record store that is configured to receive and to store a plurality of immunization records, each immunization record being associated with a media file that is treatable as an infection;
a fmgerprinter that is configured to receive a streaming media file and to dynamically determine a fingerprint associated with at least a portion of the streaming media file; and
a fingerprint comparator coupled to the immunization record store and the fingerprinter and is configured to perform actions, including:
receiving the fingerprint from the fingerprinter;
searching the plurality of immunization records for at least one immunization record that includes another fingerprint that substantially matches the fingerprint from the fingerprinter; and
if a match is substantially identified, performing a pre-determined action.

2. The media player of claim 1, wherein the streaming media file includes a motion picture.

3. The media player of claim 2, wherein the motion picture further comprises at least one of a pre-release motion picture, and a geographic release motion picture.

4. The media player of claim 1, the dynamically determined fingerprint is determined using at least one of a word count mechanism, an energy level within a waveform of at least the portion of the streaming media file, and an image vector mechanism.

5. The media player of claim 1, wherein dynamically determining the fingerprint further comprises determining the fingerprint based on varying portions of the media file as the media file is streamed through the media player.

6. The media player of claim 1, where each of the plurality of immunization records further comprises a release date associated with a date upon which the associated media file is to no longer be treated as an infection, an identifier of the associated media file, and the other fingerprint.

7. The media player of claim 1, wherein the immunization record store is further configured to perform actions, including, expunging the plurality of immunization records of any immunization record wherein a release date indicates the immunization record is to be expired.

8. The media player of claim 1, wherein the immunization record store is further configured to perform actions:
receiving another immunization record; and
if the immunization record is associated with a same media file as at least one of the stored plurality of immunization records, replacing the at least one stored immunization record with the received other immunization record.

9. The media player of claim 8, wherein receiving the other immunization record further comprises receiving the immunization record on a medium device, including at least one of a DVD, VCD, SVCD, and SACD, and over a network.

10. The media player of claim 9, wherein the medium device further includes at least one media file treatable as a non-infection.

11. The media player of claim 1, further comprising a secure real-time clock that is configured to provide a secure time to at least one of the fingerprint comparator and the immunization record store.

12. The media player of claim 1, wherein the pre-determined response further comprises at least one of sending an alert, disabling the media player, sending a message to an owner of a copyright associated with the media file, and providing a true/false indication.

13. The media player of claim 12, wherein the alert is sent over a secure communication channel.

14. A method for use in managing access to a motion picture, comprising:
receiving a plurality of immunization records, each immunization record being associated with a different motion picture that is treatable as an infection;
receiving a streamed motion picture;
dynamically determining a fingerprint associated with at least a portion of the streaming motion picture;
searching the plurality of immunization records for at least one immunization record that includes another fingerprint that substantially matches the dynamically determined fingerprint; and
if a match is substantially identified, performing a pre-determined action indicating a presence of an infection.

15. The method of claim 14, wherein each of the different motion pictures further comprise at least one of a pre-release motion picture including a theatrical release, and a geographic release motion picture.

16. The method of claim 14, the dynamically determined fingerprint is determined using at least one of a word count mechanism, an energy level within a waveform of at least the portion of the streaming motion picture, and an image vector mechanism.

17. The method of claim 14, wherein the method is arranged to operate within a media player configured as at least one of a television appliance, digital recorder, set-top box, cellular phone, mobile device, personal digital assistants (PDAs), personal computer, jukebox, hybrid Internet-music-player/home-stereo-component-system.

18. The method of claim 14, further comprising:
reviewing each of the plurality of immunization records; and
deleting any immunization records wherein a date associated with a release of the associated motion picture indicates that the immunization record is expired.

19. The method of claim 14, wherein receiving the plurality of immunization records further comprises receiving at least one immunization record using a secure communication channel.

20. The method of claim 14, further comprising:
receiving another immunization record on a medium device, including at least one of a DVD, VCD, SVCD, and SACD, and wherein the medium device further includes at least a portion of a motion picture that is treatable as a non-infection.

21. The method of claim 14, wherein receiving a plurality of immunization records further comprises storing the plurality of immunization records in a secure store.

22. An apparatus for managing access to a media file, comprising:
a means for receiving a plurality of immunization records, each immunization record being associated with a different media file that is treatable as an infection;
a means for receiving a streamed media file;
a means for dynamically determining a fingerprint associated with at least a portion of the streaming media file;
a means for searching the plurality of immunization records for at least one immunization record that includes another fingerprint that substantially matches the dynamically determined fingerprint; and
if a match is substantially identified, a means for performing a pre-determined action indicating a presence of an infection.
